# EUROPÄISCHE PATENTSCHRIFT

(11) **EP 1 429 633 B1**
(45) Veröffentlichungstag und Bekanntmachung des Hinweises auf die Patenterteilung: **13.04.2005**
(21) Anmeldenummer: 02800066.9
(22) Anmeldetag: 27.08.2002
(51) Int. Cl.: A23L 3/3571, B65D 81/26

(54) **SAUERSTOFFABSORBENS IN FORM EINES RIESELFÄHIGEN GRANULATS UND VERFAHREN ZU SEINER HERSETLLUNG**
OXYGEN-ABSORBING AGENT IN THE FORM OF A POURABLE GRANULATE AND METHOD FOR ITS PRODUCTION
AGENT ABSORBANT L'OXYGENE SOUS FORME DE GRANULAT COULANT ET PROCEDE POUR SA PREPARATION

(30) Priorität: 25.09.2001 DE 10147209
(43) Veröffentlichungstag der Anmeldung: 23.06.2004
(73) Patentinhaber: SÜD-CHEMIE AG, 80333 München (DE)
(72) Erfinder: BRANDSCH, Rainer, 82205 Gilching (DE)
(74) Vertreter: Westendorp, Michael, Dr.
(86) Internationale Anmeldenummer: PCT/EP2002/009560
(87) Internationale Veröffentlichungsnummer: WO 2003/028488

(56) Entgegenhaltungen:
- EP-A- 0 272 923
- DE-A- 2 520 792
- DE-A- 3 902 921
- US-A- 2 758 932
- US-A- 3 016 336
- US-A- 3 095 307
- US-A- 3 193 393

## Beschreibung

Die Erfindung betrifft ein sauerstoffabsorbierendes rieselfähiges Granulat, ein Verfahren zur Herstellung eines solchen Granulats sowie dessen Verwendung zur Absorption von Sauerstoff aus der Gasphase.

Im Stand der Technik sind zahlreiche Sauerstoffabsorptionsmittel bekannt. So beschreibt die US 2,758,932 eine Dispersion aus Wasser, Glucose und einer Enzymmischung mit Glucoseoxidase- und Katalaseaktivität. Die Dispersion wird von dem Produkt durch eine wasserbeständige, sauerstoffdurchlässige Barriere/Schicht getrennt. Bei den Dispersionen handelt es sich um flüssige bzw. gelartige Zubereitungen.

Die DE-OS 25 20 792 beschreibt ein Oxidationsschutzmittel für Getränke, wobei ein homogenes Gemisch aus Glucoseoxidase und Katalase sowie einem inerten Absorptionsmittel und Glucose zu dem Getränk gegeben wird.

Die US-4,996,062 beschreibt Zusammensetzungen mit Glucoseoxidase, Katalase und Glucose, die dem Nahrungsmittel, gegebenenfalls in einem getrennten Beutel, zugesetzt werden.

Die EP-A-0 417 793 beschreibt ein Verfahren zum Verpacken fester Lebensmittel sowie die Verpackung selbst. Dabei wird die Reaktion zwischen den Komponenten Glucose und Glucoseoxidase ausgenutzt, wobei die erste Komponente in die Verpackung oder auf einen gesonderten mechanisch stabilen Träger aufgesprüht wird und die zweite Komponente erst kurz vor dem Verpacken hinzugefügt wird.

Die EP-B-0 595 800 beschreibt ein Verpackungsmaterial zur Entfernung von Sauerstoff aus einer Verpackung und ein Verfahren zur Herstellung dieses Materials. Erfindungsgemäß besteht das Verpackungsmaterial aus zwei Folien zwischen denen eine flüssige sauerstoffabsorbierende Formulierung eingeschweißt ist. Die sauerstoffabsorbierende Formulierung enthält ein Enzym, das eine sauerstoffverbrauchende Reaktion bewirkt sowie ein entsprechendes Enzymsubstrat.

Die DE-38 28 513, 39 02 921 sowie die EP-B-0 359 925 und die US-5,028,578 beschreiben ein Sauerstoffabsorptionsmittel auf der Grundlage einer Kombination aus poröser gefällter Kieselsäure, Wasser und einer Mischung aus Glucose und Glucoseoxidase, wobei zumindest ein Großteil der Porenzwischenräume der gefällten Kieselsäure und anderer zugemischter Feststoffe wasserfrei gehalten werden. Die Mischungen werden durch intensive Vermischung der Komponenten erhalten.

Die im Stand der Technik bekannten Sauerstoffabsorptionsmittel sind jedoch entweder zur Absorption von Sauerstoff aus der Gasphase ungeeignet, liegen nicht in einer trocknen, gut handhabbaren Form vor und/oder sind im Bezug auf die Sauerstoffkapazität und die Sauerstoffabsorptionskinetik verbesserungswürdig.

Ziel der vorliegenden Erfindung war es daher, ein Sauerstoffabsorptionsmittel bereitzustellen, das in leicht handhabbarer Form vorliegt, zur Absorption von Sauerstoff in der Gasphase geeignet ist und dabei eine hohe und langanhaltende Sauerstoffabsorption bei hoher Sauerstoffkapazität aufweist.

Dies Aufgabe wird durch ein rieselfähiges sauerstoffabsorbierendes Granulat gemäß Anspruch 1 gelöst.

Vorteilhafte Ausführungsformen sind in den Unteransprüchen angegeben.

Die erfindungsgemäßen Sauerstoffabsorbentien liegen in Form eines zwei- bzw. mehrschichtigen rieselfähigen Granulats vor.

Es wurde überraschend gefunden, dass die so aufgebauten Granulate zum einen eine sehr leichte Handhabung und Portionierung ermöglichen und aufgrund der Anordnung der einzelnen Komponenten in unterschiedlichen benachbarten Schichten bzw. Bereichen eine hohe und langanhaltende Sauerstoffabsorption bei hoher Sauerstoffkapazität aufweisen. Die erfindungsgemäßen Granulate sind besonders zur Absorption von Sauerstoff aus der Gasphase bzw. aus gasförmigen Medien geeignet.

Erfindungsgemäß weist das Granulat einen Kernbereich mit einem Substrat für ein sauerstoffentfernendes Enzym sowie gegebenenfalls einem oder mehreren Bindemitteln auf.

Unter einem sauerstoffentfernenden Enzym wird dabei ein Enzym verstanden, das eine sauerstoffverbrauchende Reaktion katalysiert. Nach einer bevorzugten erfindungsgemäßen Ausführungsform handelt es sich dabei um eine Oxidase, die ein Enzymsubstrat unter Verbrauch von molekularem Sauerstoff oxidiert. Besonders bevorzugt wird im Rahmen der vorliegenden Erfindung Glucoseoxidase. Geeignete Enzyme sind dem Fachmann geläufig und im Handel erhältlich. In der Regel werden zwischen 10¹ und 10³ Einheiten (U) des sauerstoffentfernenden Enzyms pro g Substrat eingesetzt, z.B. in Form einer Lösung des Enzyms mit 1000 bis 4000 U/ml oder eines gefriergetrockneten Enzyms bzw. Enzymgemisches.

Im einfachsten Fall besteht der Kernbereich lediglich aus dem Substrat für das sauerstoffentfernende Enzym, beispielsweise aus Glucose. Hierbei kann nach einer erfindungsgemäßen Ausführungsform Glucose mit geeigneter Körnung in der Größenordnung von 0,1 bis 10 mm, insbesondere von 0,2 bis 5 mm eingesetzt werden. Alternativ können geeignete Granulatteilchen durch Zugabe von Wasser bzw. wässriger Glucoselösung zu Glucosepulver erzeugt werden.

Das Substrat für das sauerstoffentfernende Enzym wird vorzugsweise in der vom Enzym bevorzugten Form eingesetzt.

Falls es sich bei dem sauerstoffentfernenden Enzym um Glucoseoxidase handelt, wird das Substrat vorzugsweise als Glucose bzw. Glucosemonohydrat eingesetzt.

Nach einer bevorzugten Ausführungsform wird der Kernbereich der erfindungsgemäßen Granulate nach einem Granulier- bzw. Agglomerationsverfahren hergestellt, worauf nachstehend noch näher eingegangen wird. Es ist jedoch auch möglich, den Kernbereich im Rahmen einer herkömmlichen Kompaktierung bzw. Extrusion zu erzeugen. Dabei ist es in vielen Fällen bevorzugt, dass dem Substrat des sauerstoffentfernenden Enzyms zur leichteren Granulation bzw. stärkeren Kohäsion noch ein oder mehrere Bindemittel bzw. Granulierhilfsmittel zugegeben werden. Derartige Bindemittel sind dem Fachmann geläufig.

Nach einer bevorzugten erfindungsgemäßen Ausführungsform handelt es sich bei den Bindemitteln um pulverförmige Feststoffe. Insbesondere können pulverförmige Feststoffe mit einer Teilchengröße (d₅₀) < etwa 100 µm verwendet werden. Zu geeigneten Bindemitteln zählen, ohne dass die Erfindung hierauf beschränkt wäre, Zeolit, gefällte Kieselsäure, Alkali- bzw. Erdalkalicarbonate, -citrate und -phosphate, Hydrotalcit, mikrokristalline Cellulose, Phyllosilicate und/oder Aktivkohle.

Unter Bindemitteln kann im Rahmen der vorliegenden Erfindung jedoch auch eine Flüssigkeit bzw. eine flüssige Zusammensetzung verstanden werden, wie z.B. die vorstehend erwähnte wässrige Glucoselösung oder eine PVA-Lösung.

Nach einer besonders bevorzugten Ausführungsform besteht der Kernbereich der erfindungsgemäßen Granulate hauptsächlich, d.h. zu mehr als etwa 50 Gew.-%, aus dem Substrat eines sauerstoffentfernenden Enzyms. Übliche Bindemittel können vorteilhafter Weise mit etwa 1 bis 20 Gew.-% oder mehr eingesetzt werden.

Erfindungsgemäß schließt sich an den Kernbereich eine Hülle an, die ein auf einem Träger aufgebrachtes Enzym bzw. Enzymgemisch enthält. Die Hülle kann den Kernbereich ganz oder teilweise umgeben, wobei in den meisten Fällen ersteres bevorzugt ist. Nach einer erfindungsgemäßen Ausführungsform kann die Hülle auch mehrere Kernbereiche umschließen.

Das im Rahmen der vorliegenden Erfindung verwendete Enzym ist ein sauerstoffentfernendes Enzym wie vorstehend definiert, oder ein Enzymgemisch, das neben einem solchen Enzym weitere enzymatische Komponenten enthält.

Nach einer besonders bevorzugten erfindungsgemäßen Ausführungsform wird zusätzlich zur Glucoseoxidase eine Katalase eingesetzt. So wird bei der Oxidation der Glucose zu Gluconsäure Wasserstoffperoxid gebildet, wodurch das Enzym inaktiviert werden kann. Durch die Anwesenheit von Katalase wird eine Oxidation und Inaktivierung des Enzyms verhindert und es kann mit deutlich weniger des (teueren) Enzyms die gleiche Absorptionsleistung erzielt werden. In der Regel werden zwischen 5 und 500 Einheiten (U) Katalase eingesetzt, z.B. in Form einer Lösung des Enzyms mit 1000 bis 4000 U/ml oder in Form des gefriergetrockneten Enzyms.

Als Träger können im Rahmen der vorliegenden Erfindung die vorstehend definierten pulverförmigen Feststoffe verwendet werden. Es wurde gefunden, dass besonders vorteilhafte Ergebnisse mit Trägern erhalten werden, die einen pH-Wert, gemessen in einer 1%-igen wässrigen Suspension, im Bereich von etwa 3 bis 9, vorzugsweise von etwa 4 bis 7 aufweisen. Vorzugsweise wird der pH-Wert des Trägers auf das jeweils verwendete Enzym bzw. Enzymgemisch so abgestellt, dass sich eine optimale Enzymaktivität einstellt.

Es wurde weiterhin gefunden, dass als Träger in der Hülle der erfindungsgemäßen Granulate vorzugsweise ein pulverförmiger Feststoff mit einer verhältnismäßig hohen Wassersaugfähigkeit, insbesondere gefällte Kieselsäure, mikrokristalline Cellulose oder Stärke, aber auch ein Phyllosilicat oder deren Gemische verwendet werden. Unter verhältnismäßig hoher Wassersaugfähigkeit wird dabei eine Saugfähigkeit von mindestens 100%, wie nachstehend definiert, verstanden. Durch die Verwendung solcher Materialien wird offenbar die Stabilität der Granulatteilchen (sehr geringer Staubanteil) sowie die Rieselfähigkeit des Granulats verbessert.

Durch die gleichzeitige Anwesenheit des bzw. der Enzyme und mindestens eines pulverförmigen Feststoffes mit einer verhältnismäßig hohen Wassersaugfähigkeit in der Hülle bzw. im Hüllbereich finden sich dort gute Bedingungen für eine hohe Enzymaktivität.

Im Vergleich zu einer homogenen Mischung der einzelnen Komponenten sind somit geringere Mengen des wassersaugfähigen Feststoffes (Enzymträgers) sowie insgesamt auf das Granulat bezogen geringere Wassergehalte erforderlich, um eine gute Enzymaktivität zu erzielen. Weiterhin ermöglicht der erfindungsgemäße Aufbau eine weitgehende Trennung von Enzym und Substrat. Bei dem erfindungsgemäßen Aufbau der Granulate stellt der Kernbereich damit z.B. einen höheren Gehalt an Substrat für das sauerstoffentfernende Enzym zur Verfügung.

Nach einer besonders bevorzugten Ausführungsform umfassen die erfindungsgemäße Granulate weiterhin eine Bepuderung aus einem pulverförmigen Feststoff, der zumindest teilweise auf die Hülle der Granulate aufgebracht ist. Es wurde gefunden, dass eine solche Bepuderung die Beschaffenheit bzw. Aktivität der Granulate erheblich verbessern kann, wobei erfindungsgemäß die vorstehend definierten pulverförmigen Feststoffe verwendet werden können.

Nach einer weiteren bevorzugten erfindungsgemäßen Ausführungsform wird zur Bepuderung ein pulverförmiger Feststoff bzw. ein Feststoffgemisch mit einem hohen Weißgrad verwendet. Weiterhin wird es bevorzugt, dass der zur Bepuderung verwendete pulverförmige Feststoff zusätzlich die Funktion eines Neutralisationsmittels und/oder eines Kohlendioxid freisetzenden Mittels erfüllt.

So wurde gefunden, dass besonders vorteilhafte Sauerstoffabsorbentien erhalten werden, wenn zur Bepuderung ein Material verwendet wird, das die bei der enzymatischen Umsetzung in der benachbarten Hülle der Granulate freigesetzte Säure (Gluconsäure bei Verwendung von Glucose/Glucoseoxidase) abfängt bzw. neutralisiert.

Nach einer besonders bevorzugten Ausführungsform wird durch die Bepuderung auch die Funktion eines Kohlendioxidentwicklers bereitgestellt, so dass bei der Wahl geeigneter molarer Verhältnisse die Molmenge an absorbiertem Sauerstoff der Molmenge an freigesetztem Kohlendioxid entspricht und das Gasvolumen während der Sauerstoffabsorption unverändert bleibt.

Nach einem vereinfachten Verfahren können erfindungsgemäße Granulate auch hergestellt werden, indem die pulverförmigen Feststoffe zur Erhöhung des Weißgrades, der Säureneutralisierung und/oder der Kohlendioxidentwicklung nicht in einer gesonderten Bepuderung aufgebracht werden, sondern direkt in die Zusammensetzung der Hülle mit aufgenommen bzw. eingebracht werden.

Besonders praktikabel hat sich eine Bepuderung erwiesen, die Calciumcarbonat enthält, das gleichzeitig zur Neutralisation der enzymatisch erzeugten Säure als auch zur Freisetzung von Kohlendioxid dienen kann. Im Falle eines Glucose/Glucoseoxidase Substrat/Enzymsystems wird Glucose und Calciumcarbonat in einem Molverhältnis von etwa 1 : 1 bis 3 : 1, insbesondere etwa 2 : 1 eingesetzt. Weiterhin bietet Calciumcarbonat den Vorteil eines hohen Weißgrades, wie er z.B. bei pharmazeutischen Anwendungen der Granulate erwünscht ist. Nach einer Ausführungsform kann auf den substrathaltigen Kernbereich auch direkt eine Enzymlösung aufgesprüht und anschließend eine Hülle aus Calciumcarbonat aufgebracht werden.

Es wurde überraschend gefunden, dass die zwei- bzw. dreischichtigen erfindungsgemäßen Granulate gegenüber homogenen Mischungen, wie sie im Stand der Technik bekannt sind, sehr gut rieselfähige und praktisch staubfreie Mischungen darstellen, die eine hohe und lang anhaltende Sauerstoffabsorption aufweisen. Im Gegensatz zu homogenen Gemischen wird zudem die Gefahr verringert, dass der Großteil der Glucoseoxidase bereits während der Herstellung der Mischung mit der Glucose (und Sauerstoff) reagiert und dadurch die Sauerstoffabsorptionskapazität des fertigen Gemisches reduziert wird. Auf die Vorteile des inhomogenen Aufbaus der erfindungsgemäßen Granulate, d.h. die weitgehende oder ausschließliche Anwesenheit des Substrats im Kernbereich und die weitgehende bzw. ausschließliche Anwesenheit des sauerstoffentfernenden Enzyms bzw. Enzymgemisches außerhalb des Kernbereichs, insbesondere in der Hülle bzw. im Hüllbereich wurde bereits vorstehend eingegangen. Dadurch ist auch eine nachträgliche Aktivierung der Granulate durch Aufsprühen bzw. Einbringen des Enzyms bzw. Enzymgemisches auf die ansonsten fertigen Granulate ermöglicht. Unter weitgehender Anwesenheit des Substrats bzw. Enzyms in den vorstehend genannten Bereichen des Granulats werden dabei mehr als 50 %, vorzugsweise mehr als 70 %, besonders bevorzugt mehr als 80 % und insbesondere mehr als 90 % verstanden.

Weiterhin ermöglicht der erfindungsgemäße Aufbau der Granulate eine hohe Enzymaktivität und eine gute Substratverfügbarkeit. Durch die bevorzugte Bepuderung werden zudem eine Neutralisierung der durch die enzymatische Umsetzung erzeugten Säure sowie die vorstehenden zusätzlichen Funktionen ermöglicht.

Im Rahmen der vorliegenden Erfindung kann es durchaus, insbesondere bei der Herstellung der erfindungsgemäßen Granulate, zu einer gewissen Durchmischung im Grenzbereich zwischen Kernbereich und Hülle bzw. zwischen Hülle und Bepuderung kommen. Eine solche Durchmischung ist im Rahmen der vorliegenden Erfindung akzeptabel und es wurde gefunden, dass ein derartiger Übergang in vielen Fällen sogar die "Kommunikation" zwischen dem substrathaltigen Kernbereich und der enzymhaltigen Hülle bzw. zwischen der Hülle und der weitere Funktionsstoffe enthaltenden Bepuderung begünstigen kann. Jedoch weisen die erfindungsgemäßen Granulate keine homogene Verteilung der einzelnen Komponenten auf.

Nach einem weiteren Aspekt betrifft die Erfindung ein Verfahren zur Herstellung der vorstehend definierten sauerstoffabsorbierenden rieselfähigen Granulate bzw. Teilchen. Das Verfahren umfasst die folgenden Schritte:
a) Herstellung eines Kernbereichs, enthaltend ein Substrat für ein sauerstoffentfernendes Enzym sowie gegebenenfalls mindestens Bindemittel,
b) Aufbringen einer Hülle bzw. einer Hüllschicht, enthaltend ein sauerstoffentfernendes Enzym bzw. Enzymgemisch, wobei das Enzym bzw. Enzymgemisch mit oder ohne Träger eingesetzt wird.

In vielen Fällen kann es jedoch vorteilhaft sein, ein bereits auf einem Träger immobilisiertes Enzym bzw. Enzymgemisch direkt auf den Kernbereich aufzubringen.

Vorzugsweise erfolgt anschließend eine Bepuderung der so erhaltenen Teilchen mit mindestens einem pulverförmigen Feststoff, sofern letzterer nicht direkt in die Zusammensetzung der Hülle der Granulate aufgenommen wird.

Die im Rahmen des erfindungsgemäßen Verfahrens verwendeten Substrate, Enzyme, Bindemittel, Träger bzw. pulverförmigen Feststoffe sind wie vorstehend definiert.

Wie vorstehend erwähnt, kann zur Herstellung der Granulate bzw. Teilchen eine üblicherweise zur Granulierung, Agglomeration, Kompaktierung oder Extrusion verwendete Vorrichtung eingesetzt werden.

Das erfindungsgemäße Verfahren bietet eine hohe Flexibilität, da z.B. substrathaltige Kerne vorgefertigt und in stabiler Form lange (ohne das Enzym) gelagert werden können. Weiterhin kann während der Herstellung, so lange das temperaturempfindliche Enzym bzw. Enzymgemisch in der Hülle bzw. Hüllschicht noch nicht aufgebracht ist, bei erhöhten Temperaturen gearbeitet werden, z.B. um eine Temperaturkontrolle während der Agglomeration, Kompaktierung bzw. Extrusion überflüssig zu machen, oder das Verfahren bei erhöhter Temperatur zu beschleunigen. Wie vorstehend erwähnt, ist auch eine nachträgliche Aktivierung durch Zugabe bzw. Einbringen des Enzyms möglich.

Ein weiterer erfindungsgemäßer Aspekt betrifft die Verwendung des vorstehend definierten Granulats bzw. eines nach dem vorstehend wiedergegebenen Verfahren hergestellten Granulats zur Absorption von Sauerstoff insbesondere aus der Gasphase.

Derartige Sauerstoffabsorptionsmittel werden in zahlreichen Anwendungen zur Entfernung von Sauerstoff aus Verpackungen eingesetzt, wie beispielsweise Verpackungen von sauerstoffempfindlichen pharmazeutischen, elektronischen oder chemischen Produkten sowie Lebensmitteln.

Sauerstoffabsorber finden mehr und mehr Anwendung in der Verpackung pharmazeutischer Produkte. Da eine Vielzahl von Wirkstoffen bzw. Arzneimitteln sauerstoffempfindlich sind, wird traditionell versucht, eine sauerstoffunempfindliche Darreichungsform zu entwickeln. Die Entwicklung einer solchen Formulierung ist sehr zeit- und kostenintensiv und bei den heute üblichen kurzen "time-to-market" Zeiten nicht praktikabel. Als Ausweg bietet sich entweder der Einsatz der sauerstoffempfindlichen Darreichungsform in einer kostenintensiven Sauerstoffbarriere-Verpackung an oder die Wahl eines kostengünstigeren Verpackungskonzepts zusammen mit einem Sauerstoffabsorber.

Die erfindungsgemäßen Granulate können in jeder beliebigen Portionierung eingesetzt werden. Vorzugsweise werden die erfindungsgemäßen Granulate in einem flexiblen oder formstabilen Behälter dem sauerstoffempfindlichen Produkt bzw. dessen Verpackung beigefügt. Nach einer besonders bevorzugten Ausführungsform wird dabei ein Beutel bzw. ein Kanister mit gasdurchlässigen Wandungen, der das erfindungsgemäße sauerstoffabsorbierende Granulat enthält, dem Produkt bzw. dessen Verpackung beigelegt.

Beim Einsatz in pharmazeutischen Verpackungen ist es besonders vorteilhaft, wenn das Absorptionsmittel in einem formstabilen Behälter (sog. Canister) der Verpackung hinzugefügt wird. Diese Behältnisse werden aus hartem Kunststoff hergestellt und erlauben es in vielen Fällen, das Absorptionsmittel sicherer und schneller der pharmazeutischen Verpackung hinzuzufügen als dies mit einem flexiblen Beutel möglich wäre. So erreichen spezielle Insertionsmaschinen für Canister in Pharma-Kunststoffflaschen Geschwindigkeiten von bis zum 800 pro Minute, während die Insertion von Beuteln meist manuell oder mit Maschinen mit Geschwindigkeiten bis zu 150 pro Minute erfolgen muss.

Da diese Canister bauartbedingt sehr viel größere Löcher zum Lüftaustausch mit der Umgebung besitzen als Beutel, ist es für diese Anwendung besonders wichtig, ein staubfreies und gut rieselfähiges Granulat des Absorptionsmittels zu verwenden, wie es erfindungsgemäß bereitgestellt wird.

Die Erfindung wird nun anhand der nachstehenden nicht beschränkenden Beispiele näher erläutert:

### Beispiele:

### Beispiel 1: (Vergleich)

7,5 g Glucose (Merck KgaA, Deutschland), 1,9 g Calciumcarbonat (Merck KgaA, Deutschland) und 2,0 g mikrokristalline Cellulose (Vivapur Typ 12, J. Rettenmaier & Söhne GmbH, Deutschland) wurden innig vermischt und in einen Barrierebeutel eingeschweißt. Der Barrierebeutel wurde aus einer Verbundfolie PET/AI/PE mit einer Kantenlänge von 30 cm hergestellt und mit einem Gasventil und einem Septum versehen. Der verschlossene Beutel wurde über das Ventil evakuiert und anschließend mit 2 1 Luft befüllt. 2,0 g einer Lösung, enthaltend 375 U Glucoseoxidase (OxyGo 1500, Genencor International Inc., Holland) und Wasser, wurde mit einer Spritze durch das Septum in den Beutel gesprüht. Die Zusammensetzung der Probe ist in Tabelle 1 zusammengefasst. Die Sauerstoffkonzentration in dem Barrierebeute wurde mit Hilfe eines Gaschromatographen bestimmt. Es wurden nach 6, 24 und 72 h Proben entnommen. Die Sauerstoffkonzentrationen in Abhängigkeit von der Zeit sind in Tabelle 2 zusammengefasst.

### Beispiel 2:

2000 g Glucose (Roferose ST, Roquett GmbH, Deutschland) und 500 g mikrokristalline Cellulose (Vivapur Typ 12, J. Rettenmaier & Söhne GmbH, Deutschland) wurden in einem Mischaggregat vom Typ R02 der Maschinenfabrik Gustav Eirich gegeben und bei 3000 U/min gemischt. Nach 5 min wurden 363 g Wasser zugesprüht und so lange gerührt, bis sich ein Granulat bildet. Das fertige Granulat wurde unter Rühren (Rührgeschwindigkeit von 900 U/min) mit 67 g einer Lösung, enthaltend 100.000 U Glucoseoxidase (OxyGo 1500, Genencor International Inc., Holland) und Wasser, besprüht. Zu dem Granulat wurden anschließend 500 g Calciumcarbonat (Merck KgaA, Deutschland) zugegeben und so lange gemischt, bis das Calciumcarbonat vollständig aufgenommen wurde. Die Zusammensetzung der Probe ist in Tabelle 1 zusammengefasst. Es wurden 12,9 g des sauerstoffabsorbierenden Granulats in einen Barrierebeutel eingeschweißt. Der verschlossene Beutel wurde über das Ventil evakuiert und anschließend mit 2 l Luft befüllt. Die Sauerstoffkonzentration in dem Barrierebeutel wurde mit Hilfe eines Gaschromatographen bestimmt. Es wurden nach 6, 24 und 72 h Proben entnommen. Die Sauerstoffkonzentrationen in Abhängigkeit von der Zeit sind in Tabelle 2 zusammengefasst.

### Beispiel 3:

2000 g Glucose (Roferose ST, Roquett GmbH, Deutschland) und 500 g mikrokristalline Cellulose (Vivapur Typ 12, J. Rettenmaier & Söhne GmbH, Deutschland) wurden in einem Mischaggregat vom Typ R02 der Maschinenfabrik Gustav Eirich gegeben und bei 3000 U/min gemischt. Nach 5 min wurden 350 g Wasser zugesprüht und so lange gerührt, bis sich ein Granulat bildet. Der Mischer wurde entleert und das Granulat wurde in einem verschlossenen Beutel 5 Tage lang gelagert. 2000 g dieses Granulats und 200 g mikrokristalline Cellulose (Vivapur Typ 12, J. Rettenmaier & Söhne GmbH, Deutschland) wurden in dem Mischaggregat vorgelegt. Unter Rühren (Rührgeschwindigkeit: 900 U/min) wurden 280 g einer Lösung, enthaltend 70.200 U Glucoseoxidase (OxyGo 1500, Genencor International Inc., Holland) und Wasser, aufgesprüht, wobei eine Hülle um die vorgelegten Granulatkerne gebildet wurde. Zu dem entstandenen Kern-Hülle-Granulat wurden anschließend 351 g Calciumcarbonat (Merck KgaA, Deutschland) zugegeben und so lange gemischt, bis das Calciumcarbonat vollständig an der Granulatoberfläche gebunden wurde. Die Zusammensetzung der Probe ist in Tabelle 1 zusammengefasst. Es wurden 15,1 g des sauerstoffabsorbierenden Granulats in einen Barrierebeutel eingeschweißt. Der verschlossene Beutel wurde über das Ventil evakuiert und anschließend mit 2 l Luft befüllt. Die Sauerstoffkonzentration in dem Barrierebeutel wurde mit Hilfe eines Gaschromatographen bestimmt. Es wurden nach 6, 24 und 72 h Proben entnommen. Die Sauerstoffkonzentrationen in Abhängigkeit von der Zeit sind in Tabelle 2 zusammengefasst.

### Beispiel 4:

2000 g Glucose (Roferose ST, Roquett GmbH, Deutschland) und 400 g mikrokristalline Cellulose (Vivapur Typ 12, J. Rettenmaier und Söhne GmbH, Deutschland) wurden innig gemischt. Die Pulvermischung wurde in einem Kompaktor vom Typ L200/50P der Firma Hutt kompaktiert. Das Kompaktat wurde im Labormörser zerkleinert und jeweils über ein Laborsieb mit der Maschenweite 0,5 mm und 1,0 mm gesiebt. 9,0 g des Kerngranulates mit einem Durchmesser von 0,5 < d < 1,0 mm wurden mit 2,0 g einer Lösung, enthaltend 375 U Glucoseoxidase (OxyGo 1500, Genencor International Inc., Holland) und Wasser, besprüht. Anschließend wurden 1,9 g Calciumcarbonat zugegeben und mit einem Spatel solange gemischt, bis das Calciumcarbonat vollständig aufgenommen wurde. Die Zusammensetzung der Probe ist in Tabelle 1 zusammengefasst. Das erhaltene sauerstoffabsorbierende Granulat wurde in einen Barrierebeutel eingeschweißt. Der verschlossene Beute wurde über das Ventil evakuiert und anschließend mit 2 l Luft befüllt. Die Sauerstoffkonzentration in dem Barrierebeutel wurde mit Hilfe eines Gaschromatographen bestimmt. Es wurden nach 6, 24 und 72 h Proben entnommen. Die Sauerstoffkonzentrationen in Abhängigkeit von der Zeit sind in Tabelle 2 zusammengefasst.

**Tabelle 1**

| **Beispiel** | **Glucose** | **Calciumcarbonat** **[%]** | **Mikrokristalline** **Cellulose [%]** | **Glucoseoxidase** **1500 U/ml [%]** | **Wasser** **[%]** |
|---|---|---|---|---|---|
| 1 | 55,97 | 14,18 | 14,93 | 1,87 | 13,06 |
| 2 | 58,31 | 14,58 | 14,58 | 1,94 | 10,59 |
| 3 | 49,58 | 12,40 | 19,46 | 1,65 | 16,91 |
| 4 | 58,14 | 14,73 | 11,63 | 1,94 | 13,56 |

**Tabelle 2**

| **Sauerstoffkonzentration** | **Zeit** | | | |
|---|---|---|---|---|
| **Beispiel** | **0** **[h]** | **6** [h] | **24** [h] | **72** [h] |
| 1 | 20,9 | 11,1 | 6,6 | 5,2 |
| 2 | 20,9 | 15,7 | 3,7 | 1,5 |
| 3 | 20,9 | 15,1 | 2,4 | 0,7 |
| 4 | 20,9 | 12,9 | 4,7 | 2,8 |

### Beispiel 5:

2000 g Glucose (Roferose ST, Roquett GmbH, Deutschland) und 500 g gefällte Kieselsäure (Sipernat 22, Degussa AG, Deutschland) wurden in ein Mischaggregat vom Typ R02 der Maschinenfabrik Gustav Eirich gegeben und bei 3000 U/min gemischt. Nach 5 min wurden 400 g Wasser zugesprüht und so lange gerührt, bis sich ein Granulat bildet. Der Mischer wurde entleert und das Granulat wurde ein einem verschlossenen Behälter 4 Tage lang gelagert. 200 g gefällte Kieselsäure (Sipernat 22, Degussa AG, Deutschland) wurden in dem Mischaggregat vorgelegt. Unter Rühren (Rührgeschwindigkeit: 900 U/min) wurden 360 g einer Lösung, enthaltend 69.000 U Glucoseoxidase (OxyGo 1500, Genecor International Inc., Holland) und Wasser, aufgesprüht. Anschließend wurden unter Rühren 2000 g des Granulats zugegeben, wobei eine Hülle um die Granulatkerne gebildet wurde. Zu dem entstandenen Kern-Hülle-Granulat wurden anschließend 345 g Calciumcarbonat (Merck KgaA, Deutschland) zugegeben und so lange gemischt, bis das Calciumcarbonat vollständig an der Granulatoberfläche gebunden wurde. Die Zusammensetzung der Probe ist in Tabelle 3 zusammengefasst. Es wurden 15,8 g des sauerstoffabsorbierenden Granulats in einem Barrierebeutel eingeschweißt. Der verschlossene Beutel wurde über das Ventil evakuiert und anschließend mit 2 l Luft befüllt. Die Sauerstoffkonzentration in dem Barrierebeutel wurde mit Hilfe eines Gaschromatographen bestimmt. Es wurden nach 6, 24 und 72 h Proben entnommen. Die Sauerstoffkonzentrationen in Abhängigkeit von der Zeit sind in Tabelle 4 zusammengefasst.

**Tabelle 3**

| **Beispiel** | **Glucose** | **Calciumcarbonat [%]** | **gefällte Kieselsäure [%]** | **Glucoseoxidase 1500 U/ml [%]** | **Wasser [%]** |
|---|---|---|---|---|---|
| 5 | 47,47 | 11,88 | 18,76 | 1,58 | 20,31 |

**Tabelle 4**

| **Sauerstoffkonzentration** | **Zeit** | | | |
|---|---|---|---|---|
| **Beispiel** | **0** **[h]** | **6** [h] | **24** [h] | **72** [h] |
| 5 | 20,9 | 15,3 | 2,7 | 0,8 |

### Beispiel 6:

2000 g Glucose (Roferose ST, Roquett GmbH, Deutschland) und 500 g gefällte Kieselsäure (Sipernat 22, Degussa AG, Deutschland) wurden in ein Mischaggregat vom Typ R02 der Maschinenfabrik Gustav Eirich gegeben und bei 3000 U/min gemischt. Nach 5 min wurden 400 g Wasser zugesprüht und so lange gerührt, bis sich ein Granulat bildet. Der Mischer wurde entleert und das Granulat wurde ein einem verschlossenen Behälter aufbewahrt. 2000 g dieses Granulats und 200 g mikrokristalline Cellulose (Vivapur Typ 12, J. Rettenmaier & Söhne GmbH, Deutschland) wurden in dem Mischaggregat vorgelegt. Unter Rühren (Rührgeschwindigkeit: 900 U/min) wurden 280 g einer Lösung, enthaltend 69.000 U Glucoseoxidase (OxyGo 1500, Genencor International Inc., Holland) und Wasser, aufgesprüht, wobei eine Hülle um die vorgelegten Granulatkerne gebildet wurde. Zu dem entstandenen Kern-Hülle-Granulat wurden anschließend 345 g Calciumcarbonat (Merck KgaA, Deutschland) zugegeben und so lange gemischt, bis das Calciumcarbonat vollständig an der Granulatoberfläche gebunden wurde. Die Zusammensetzung der Probe ist in Tabelle 5 zusammengefasst. Es wurden 15,4 g des sauerstoffabsorbierenden Granulats in einem Barrierebeutel eingeschweißt. Der verschlossene Beutel wurde über das Ventil evakuiert und anschließend mit 2 l Luft befüllt. Die Sauerstoffkonzentration in dem Barrierebeutel wurde mit Hilfe eines Gaschromatographen bestimmt. Es wurden nach 6, 24 und 72 h Proben entnommen. Die Sauerstoffkonzentrationen in Abhängigkeit von der Zeit sind in Tabelle 6 zusammengefasst.

### Beispiel 7:

2000 g Glucose (Roferose ST, Roquett GmbH, Deutschland) und 500 g Bentonit (Printosil, Süd-Chemie AG, Deutschland) wurden in ein Mischaggregat vom Typ R02 der Maschinenfabrik Gustav Eirich gegeben und bei 3000 U/min gemischt. Nach 5 min wurden 175 g Wasser zugesprüht und so lange gerührt, bis sich ein Granulat bildet. Der Mischer wurde entleert und das Granulat wurde ein einem verschlossenen Behälter aufbewahrt. 2000 g dieses Granulats und 200 g mikrokristalline Cellulose (Vivapur Typ 12, J. Rettenmaier & Söhne GmbH, Deutschland) wurden in dem Mischaggregat vorgelegt. Unter Rühren (Rührgeschwindigkeit: 900 U/min) wurden 280 g einer Lösung, enthaltend 74.750 U Glucoseoxidase (OxyGo 1500, Genencor International Inc., Holland) und Wasser, aufgesprüht, wobei eine Hülle um die vorgelegten Granulatkerne gebildet wurde. Zu dem entstandenen Kern-Hülle-Granulat wurden anschließend 374 g Calciumcarbonat (Merck KgaA, Deutschland) zugegeben und so lange gemischt, bis das Calciumcarbonat vollständig an der Granulatoberfläche gebunden wurde. Die Zusammensetzung der Probe ist in Tabelle 5 zusammengefasst. Es wurden 14,3 g des sauerstoffabsorbierenden Granulats in einem Barrierebeutel eingeschweißt. Der verschlossene Beutel wurde über das Ventil evakuiert und anschließend mit 2 l Luft befüllt. Die Sauerstoffkonzentration in dem Barrierebeutel wurde mit Hilfe eines Gaschromatographen bestimmt. Es wurden nach 6, 24 und 72 h Proben entnommen. Die Sauerstoffkonzentrationen in Abhängigkeit von der Zeit sind in Tabelle 6 zusammengefasst.

### Beispiel 8:

2000 g Glucose (Roferose ST, Roquett GmbH, Deutschland) und 500 g Zeolith (Wessalit P, Degussa AG, Deutschland) wurden in ein Mischaggregat vom Typ R02 der Maschinenfabrik Gustav Eirich gegeben und bei 3000 U/min gemischt. Nach 5 min wurden 200 g Wasser zugesprüht und so lange gerührt, bis sich ein Granulat bildet. Der Mischer wurde entleert und das Granulat wurde ein einem verschlossenen Behälter aufbewahrt. 2000 g dieses Granulats und 200 g mikrokristalline Cellulose (Vivapur Typ 12, J. Rettenmaier & Söhne GmbH, Deutschland) wurden in dem Mischaggregat vorgelegt. Unter Rühren (Rührgeschwindigkeit: 900 U/min) wurden 280 g einer Lösung, enthaltend 74.050 U Glucoseoxidase (OxyGo 1500, Genencor International Inc., Holland) und Wasser, aufgesprüht, wobei eine Hülle um die vorgelegten Granulatkerne gebildet wurde. Zu dem entstandenen Kern-Hülle-Granulat wurden anschließend 370 g Calciumcarbonat (Merck KgaA, Deutschland) zugegeben und so lange gemischt, bis das Calciumcarbonat vollständig an der Granulatoberfläche gebunden wurde. Die Zusammensetzung der Probe ist in Tabelle 5 zusammengefasst. Es wurden 14,4 g des sauerstoffabsorbierenden Granulats in einem Barrierebeutel eingeschweißt. Der verschlossene Beutel wurde über das Ventil evakuiert und anschließend mit 2 l Luft befüllt. Die Sauerstoffkonzentration in dem Barrierebeutel wurde mit Hilfe eines Gaschromatographen bestimmt. Es wurden nach 6, 24 und 72 h Proben entnommen. Die Sauerstoffkonzentrationen in Abhängigkeit von der Zeit sind in Tabelle 6 zusammengefasst.

**Tabelle 5**

| **Beispiel** | **Glucose** | **Calciumcarbonat** **[%]** | **Bindemittel** **[%]** | **Mikrokristalline Cellulose [%]** | **Glucoseoxidase 1500 U/ml [%]** | **Wasser** **[%]** |
|---|---|---|---|---|---|---|
| 6 | 48,81 | 12,21 | 12,21 | 7,08 | 1,63 | 18,05 |
| 7 | 52,38 | 13,10 | 13,10 | 7,01 | 1,75 | 12,65 |
| 8 | 51,96 | 13,00 | 13,00 | 7,02 | 1,73 | 13,29 |

**Tabelle 6**

| **Sauerstoffkonzentration** | **Zeit** | | | |
|---|---|---|---|---|
| **Beispiel** | **0** **[h]** [h] | **6** [h] | **24** [h] | **72** [h] |
| 6 | 20,9 | 15,5 | 2,8 | 0,9 |
| 7 | 20,9 | 16,3 | 5,4 | 2,7 |
| 8 | 20,9 | 16,5 | 6,2 | 3,1 |

### Beispiel 9:

14,4 g des sauerstoffabsorbierenden Granulats aus Beispiel 6 wurden in insgesamt 5 Canister (zylinderförmig, Durchmesser 1,9 cm, Höhe 2,4 cm; jeweils 360 Bohrungen mit 150 µm Durchmesser in Deckel und Boden des Zylinders) gefüllt. Die Canister wurden in einen Barrierebeutel eingeschweißt. Der verschlossene Beutel wurde evakuiert und anschießend mit 2 l Luft gefüllt. Die Sauerstoffkonzentration im Barrierebeutel wurde mit Hilfe eines Gaschromatographen bestimmt. Es wurden nach 6, 24, 72 und 96 Stunden Proben entnommen.

| 0 Std. | 6 Std. | 24 Std. | 72 Std. | 96 Std. |
|---|---|---|---|---|
| 20,9 % | 17,0% | 6,3% | 3,5% | 1,1% |

| Bewertung* der Granulate: | | | |
|---|---|---|---|
| **Beispiel** | **Fließfähigkeit** | **Staubfreiheit** | **Stabilität** |
| 1 | -- | -- | -- |
| 2 | + | ++ | ++ |
| 3 | ++ | ++ | ++ |
| 4 | o | o | o |
| 5 | ++ | + | ++ |
| 6 | ++ | ++ | ++ |
| 7 | ++ | ++ | ++ |
| 8 | ++ | ++ | ++ |

| | | | |
|---|---|---|---|
| *: ++ sehr gut; + gut; o mittelmäßig, - schlecht; -- sehr schlecht | | | |

### Bestimmung der Wassersaugfähigkeit:

In einem gewogenen Sieb mit Faltenfilter werden genau 3,0 g des Materials eingewogen. Das gefüllte Sieb wird in ein Becherglas mit Wasser derart eingehängt, dass das Material vollständig mit Wasser bedeckt ist. Nach einer Saugzeit von 20 Minuten wird das Sieb für weitere 20 Minuten in ein leeres Becherglas zum Abtropfen gehängt. Nach dem Abtropfen wird das Sieb samt Inhalt erneut gewogen. Die Wassersaugfähigkeit ergibt sich aus dem Verhältnis der aufgesogenen Wassermenge zu der Einwaage. Die Bestimmung wurde als Doppelbestimmung durchgeführt. Die Differenz zwischen den beiden Bestimmungen war kleiner als 10%.

| **Bindemittel** | **Wassersaugfähigkeit [%]** |
|---|---|
| gefällte Kieselsäure (Sipernat 22, Degussa AG) | 349 |
| Mikrokristalline Cellulose (Vivapur Typ 12, JRS GmbH) | 298 |
| Bentonit (Printosil, Süd-Chemie AG) | 349 |
| Zeolith (Wessalit P, Degussa AG) | 51 |
| Calciumcarbonat (Merck KgaA) | 92 |

## Patentansprüche

1. Rieselfähiges sauerstoffabsorbierendes Granulat mit einem inhomogenen Aufbau, umfassend
a) einen Kernbereich, enthaltend ein Substrat für ein sauerstoffentfernendes Enzym sowie gegebenenfalls mindestens ein Bindemittel,
b) eine den Kernbereich (a) zumindest teilweise umgebenden Hülle, enthaltend ein sauerstoffentfernendes Enzym bzw. Enzymgemisch,
c) vorzugsweise eine die Hülle (b) zumindest teilweise auf der dem Kern gegenüberliegenden Seite umgebende Bepuderung aus einem pulverförmigen Feststoff.

2. Granulat nach Anspruch 1, **dadurch gekennzeichnet, dass** mindestens 80 Gew.-%, insbesondere mindestens 90 Gew.-% der Granulatteilchen einen Durchmesser zwischen etwa 0,1 und 10 mm, insbesondere etwa 0,2 und etwa 5 mm aufweisen.

3. Granulat nach Anspruch 1 oder 2, **dadurch gekennzeichnet, dass** es sich bei dem sauerstoffentfernenden Enzym um eine Oxidase, insbesondere um Glucoseoxidase handelt.

4. Granulat nach einem der vorstehenden Ansprüche, **dadurch gekennzeichnet, dass** das Enzym bzw. Enzymgemisch in auf einem Träger aufgebrachter oder immobilisierter Form vorliegt.

5. Granulat nach Anspruch 1 oder 2, **dadurch gekennzeichnet, dass** es sich bei dem Substrat des sauerstoffentfernenden Enzyms um das Substrat einer Oxidase, insbesondere um Glucose handelt.

6. Granulat nach einem der vorstehenden Ansprüche, **dadurch gekennzeichnet, dass** es sich bei dem Bindemittel um ein oder mehrere pulverförmige Feststoffe mit einer Teilchengröße (d₅₀) < 100 µm handelt.

7. Granulat nach Anspruch 5, **dadurch gekennzeichnet, dass** der pulverförmige Feststoff Zeolith, gefällte Kieselsäure, ein Alkali- bzw. Erdalkalicarbonat, -citrat oder -phosphat, Hydrotalcit, Cellulose bzw. Cellulosederivate, Schichtsilicate, insbesondere Bentonit, sonstige silicatische Trägermaterialien oder Aktivkohle sowie Gemische aus den vorliegenden Feststoffen darstellt.

8. Granulat nach einem der vorstehenden Ansprüche, **dadurch gekennzeichnet, dass** das Bindemittel eine Flüssigkeit, insbesondere eine wässrige Flüssigkeit, gegebenenfalls mit Glucose und/oder PVA umfasst.

9. Granulat nach einem der vorstehenden Ansprüche, **dadurch gekennzeichnet, dass** es sich bei dem Träger mindestens um einen pulverförmigen Feststoff handelt, wie er in den vorstehenden Ansprüchen definiert ist.

10. Granulat nach einem der vorstehenden Ansprüche, **dadurch gekennzeichnet, dass** der Feststoff einen pH-Wert im Bereich von etwa 3 bis 9, insbesondere 4 bis 7 aufweist.

11. Granulat nach einem der vorstehenden Ansprüche, **dadurch gekennzeichnet, dass** der pulverförmige Feststoff eine Saugfähigkeit von mindestens 100% aufweist.

12. Granulat nach einem der vorstehenden Ansprüche, **dadurch gekennzeichnet, dass** der zur Bepuderung verwendete Feststoff ein pulverförmiger Feststoff, wie in den vorstehenden Ansprüchen definiert, ist und einen hohen Weißgrad aufweist.

13. Granulat nach einem der vorstehenden Ansprüche, **dadurch gekennzeichnet, dass** der zur Bepuderung verwendete pulverförmige Feststoff ein Neutralisationsmittel ist.

14. Granulat nach einem der vorstehenden Ansprüche, **dadurch gekennzeichnet, dass** der zur Bepuderung verwendete pulverförmige Feststoff beim Ansäuern CO₂ oder ein anderes Gas freisetzen kann.

15. Granulat nach einem der vorstehenden Ansprüche, **dadurch gekennzeichnet, dass** die Glucose als Glucosemonohydrat eingesetzt wird.

16. Granulat nach einem der vorstehenden Ansprüche, **dadurch gekennzeichnet, dass** die Hülle zwei oder mehr Kernbereiche zumindest teilweise umschließt.

17. Verfahren zur Herstellung eines Sauerstoffabsorbierenden rieselfähigen Granulats mit einem inhomogenen Aufbau, umfassend die folgenden Schritte:
a) Herstellung eines Kernbereichs, enthaltend ein Substrat für ein sauerstoffentfernendes Enzym sowie gegebenenfalls mindestens eines Bindemittel,
b) Erzeugung einer Hülle bzw. Hüllschicht, enthaltend ein Sauerstoffentfernendes Enzyms bzw. Enzymgemisch, wobei das Enzym bzw. Enzymgemisch mit oder ohne einen Träger eingesetzt wird,
c) gegebenenfalls Bepudern der so erhaltenen Teilchen mit mindestens einem pulverförmigen Feststoff.

18. Verfahren nach Anspruch 17, **dadurch gekennzeichnet, dass** der Hüllbereich aus der äußeren Schicht des Kernbereichs durch Auf- bzw. Einbringen des Enzyms/Enzymgemisches erzeugt wird.

19. Verfahren nach Anspruch 17 oder 18, **dadurch gekennzeichnet, dass** es sich bei dem Substrat für ein sauerstoffentfernendes Enzym, dem Bindemittel, dem Träger und dem pulverförmigen Feststoff um die in den vorstehenden Ansprüchen definierten Stoffe bzw. Stoffgemische handelt.

20. Verwendung des Granulats nach einem der Ansprüche 1 bis 16 bzw. einem nach dem Verfahren gemäß einem der Ansprüche 17 bis 19 hergestellten Granulat zur Absorption von Sauerstoff.

21. Verwendung nach Anspruch 20 zur Absorption von Sauerstoff aus der Gasphase.

22. Verwendung nach Anspruch 20 oder 21 zum Schutz sauerstoffempfindlicher Produkte, insbesondere aus dem elektronischen bzw. pharmazeutischen Sektor.

23. Verwendung nach einem der Ansprüche 20 bis 22, **dadurch gekennzeichnet, dass** das sauerstoffabsorbierende Granulat in einem flexiblen oder formstabilen Behälter, insbesondere einem Beutel oder Kanister mit mindestens einer gasdurchlässigen Wandung eingesetzt wird.

## Claims

1. A free-flowing oxygen-adsorbing granular material of inhomogeneous composition, comprising
a) a core region containing a substrate for an oxygen-removing enzyme, as well as optionally at least one binder,
b) a shell at least partly surrounding the core region (a), containing an oxygen-removing enzyme or enzyme mixture,
c) preferably, a powder application of a powdery solid substance surrounding the shell (b) at least partly on the side opposite the core.

2. A granular material according to Claim 1, **characterised in that** at least 80 % by weight, in particular at least 90 % by weight of the particles of granular material are of a diameter of between approximately 0.1 and 10 mm, in particular approximately 0.2 and approximately 5 mm.

3. A granular material according to Claim 1 or 2, **characterised in that** the oxygen-removing enzyme is an oxidase, in particular a glucose oxidase.

4. A granular material according to any one of the preceding Claims, **characterised in that** the enzyme or enzyme mixture is present in a form applied to a support or in an immobilised form.

5. A granular material according to Claim 1 or 2, **characterised in that** the substrate of the oxygen-removing enzyme is a substrate of an oxidase, in particular glucose.

6. A granular material according to any one of the preceding Claims, **characterised in that** the binder is one or more powdery solids with a particle size (d₅₀) < 100 µm.

7. A granular material according to Claim 5, **characterised in that** the powdery solid represents zeolite, precipitated silicic acid, an alkaline or alkaline earth carbonate, citrate or phosphate, hydrotalcite, cellulose or cellulose derivatives, layered silicates, in particular bentonite, other siliceous support materials or activated carbon, as well as mixtures of the preceding solids.

8. A granular material according to any one of the preceding Claims, **characterised in that** the binder comprises a liquid, in particular an aqueous liquid, optionally with glucose and/or a PVA.

9. A granular material according to any one of the preceding Claims, **characterised in that** the support is at least one powdery solid, as defined in the preceding Claims.

10. A granular material according to any one of the preceding Claims, **characterised in that** the solid has a pH value in the range of from approximately 3 to 9, in particular 4 to 7.

11. A granular material according to any one of the preceding Claims, **characterised in that** the powdery solid has an absorbency of at least 100 %.

12. A granular material according to any one of the preceding Claims, **characterised in that** the solid used for powdering is a powdery solid, as described in the preceding Claims, and has a high degree of whiteness.

13. A granular material according to any one of the preceding Claims, **characterised in that** the powdery solid used for powdering is a neutralising agent.

14. A granular material according to any one of the preceding Claims, **characterised in that** the powdery solid used for powdering can, when acidified, liberate CO₂ or another gas.

15. A granular material according to any one of the preceding Claims, **characterised in that** the glucose is used as glucose monohydrate.

16. A granular material according to any one of the preceding Claims, **characterised in that** the shell encloses at least partly two or more core regions.

17. A method of preparing an oxygen-absorbing free-flowing granular material of inhomogeneous composition, comprising the following steps:
a) preparing a core region containing a substrate for an oxygen-removing enzyme, as well as optionally at least one binder,
b) producing a shell or shell layer, containing an oxygen-removing enzyme or enzyme mixture, wherein the enzyme or enzyme mixture is used with or without a support,
c) optionally, powdering the resultant particles with at least one powdery solid.

18. A method according to Claim 17, **characterised in that** the shell zone is produced from the outer layer of the core region by applying or introducing the enzyme/enzyme mixture.

19. A method according to Claim 17 or 18, **characterised in that** the substrate for an oxygen-removing enzyme, the binder, the support and the powdery solid are the substances or substance mixtures defined in the preceding Claims.

20. Use of the granular material according to any one Claims 1 to 16 or a granular material for the absorption of oxygen prepared in accordance with the method according to any of Claims 17 to 19.

21. Use according to Claim 29 for the absorption of oxygen from the gaseous phase.

22. Use according to Claim 20 or 21 for protecting oxygen-sensitive products, in particular in the electronic or pharmaceutical sector.

23. Use according to any one Claims 20 to 22, **characterised in that** the oxygen-absorbing granular material is inserted in a flexible or rigid container, in particular a sachet or can with at least one gas-permeable wall.

## Revendications

1. Granulat coulant absorbant l'oxygène avec une structure non-homogène, **caractérisé en ce qu'**il comprend :
a) une zone de noyau contenant un substrat pour une enzyme éliminant l'oxygène ainsi que, le cas échéant, au moins un liant,
b) une enveloppe entourant au moins en partie la zone de noyau (a), contenant une enzyme éliminant l'oxygène ou éventuellement un mélange d'enzymes,
c) de préférence un poudrage composé d'une matière solide poudreuse, entourant l'enveloppe (b) au moins en partie sur la face opposée au noyau.

2. Granulat selon la revendication 1, **caractérisé en ce qu'**au moins 80 % en poids, notamment au moins 90 % en poids des particules du granulat présentent un diamètre entre environ 0,1 et 10 mm, notamment environ 0,2 et environ 5 mm.

3. Granulat selon la revendication 1 ou 2, **caractérisé en ce que** l'enzyme éliminant l'oxygène est une oxydase, en particulier une glucose oxydase.

4. Granulat selon l'une des revendications précédentes, **caractérisé en ce que** l'enzyme ou éventuellement le mélange d'enzymes est présent sous une forme immobilisée ou appliquée sur un support.

5. Granulat selon la revendication 1 ou 2, **caractérisé en ce que** le substrat de l'enzyme supprimant l'oxygène est le substrat d'une oxydase, et qu'il s'agit notamment de glucose.

6. Granulat selon l'une des revendications précédentes, **caractérisé en ce que** le liant est une ou plusieurs matières solides poudreuses avec une taille de particules élémentaires (d₅₀) inférieure à 100 µm.

7. Granulat selon la revendication 5, **caractérisé en ce que** la matière solide poudreuse représente un zéolithe, de l'acide silique précipité, un carbonate alcalin ou éventuellement un carbonate, un citrate ou un phosphate alcalinoterreux, une hydrotalcite, de la cellulose ou éventuellement des dérivés de cellulose, des silicates stratifiés, notamment de la bentonite, d'autres matières de support silicatées ou des charbons actifs ainsi que des mélanges composés des présentes matières solides.

8. Granulat selon l'une des revendications précédentes, **caractérisé en ce que** le liant comprend un liquide, notamment un liquide aqueux, le cas échéant avec du glucose et/ou du PVA.

9. Granulat selon l'une des revendications précédentes, **caractérisé en ce que** le support est au moins une matière solide poudreuse telle qu'elle est définie dans les revendications précédentes.

10. Granulat selon l'une des revendications précédentes, **caractérisé en ce que** la matière solide présente une valeur de pH dans la gamme allant d'environ 3 à 9, notamment de 4 à 7.

11. Granulat selon l'une des revendications précédentes, **caractérisé en ce que** la matière solide poudreuse présente un pouvoir absorbant d'au moins 100 %.

12. Granulat selon l'une des revendications précédentes, **caractérisé en ce que** la matière solide utilisée pour le poudrage est une matière solide poudreuse telle qu'elle est définie dans les revendications précédentes, et présente un degré de blanc élevé.

13. Granulat selon l'une des revendications précédentes, **caractérisé en ce que** la matière solide poudreuse utilisée pour le poudrage est un neutralisant.

14. Granulat selon l'une des revendications précédentes, **caractérisé en ce que** la matière solide poudreuse utilisée pour le poudrage peut libérer du CO₂ ou un autre gaz lors de l'acidification.

15. Granulat selon l'une des revendications précédentes, **caractérisé en ce que** le glucose est utilisé en tant que glucose monohydrate.

16. Granulat selon l'une des revendications précédentes, **caractérisé en ce que** l'enveloppe renferme au moins en partie deux ou plusieurs zones de noyau.

17. Procédé pour la préparation d'un granulat coulant absorbant l'oxygène avec une structure non-homogène, **caractérisé en ce qu'**il comprend les étapes consistant à :
a) préparer une zone de noyau contenant un substrat pour une enzyme supprimant l'oxygène ainsi que, le cas échéant, au moins un liant,
b) créer une enveloppe ou éventuellement une couche enveloppante contenant une enzyme supprimant l'oxygène ou éventuellement un mélange d'enzymes, l'enzyme ou éventuellement le mélange d'enzymes étant utilisé avec ou sans support,
c) poudrer le cas échéant les particules ainsi obtenues avec au moins une matière solide poudreuse.

18. Procédé selon la revendication 17, **caractérisé en ce que** la zone enveloppante est créée à partir de la couche externe de la zone de noyau en appliquant ou éventuellement en introduisant l'enzyme/le mélange d'enzymes.

19. Procédé selon la revendication 17 ou 18, **caractérisé en ce que** le substrat pour une enzyme supprimant l'oxygène, le liant, le support et la matière solide poudreuse sont les matières ou éventuellement les mélanges de matières définis dans les revendications précédentes.

20. Utilisation du granulat selon l'une des revendications 1 à 16 ou éventuellement d'un granulat préparé selon le procédé conformément à l'une des revendications 17 à 19 pour l'absorption de l'oxygène.

21. Utilisation selon la revendication 20 pour l'absorption de l'oxygène à partir de la phase gazeuse.

22. Utilisation selon la revendication 20 ou 21 pour la protection de produits sensibles à l'oxygène, issus notamment du secteur électronique ou éventuellement pharmaceutique.

23. Utilisation selon l'une des revendications 20 à 22, **caractérisée en ce que** le granulat absorbant l'oxygène est utilisé dans un récipient flexible ou indéformable, notamment dans un sachet ou dans un bidon avec au moins une paroi perméable au gaz.
